# EUROPÄISCHE PATENTSCHRIFT

(11) **EP 1 168 952 B1**
(45) Veröffentlichungstag und Bekanntmachung des Hinweises auf die Patenterteilung: **25.06.2003**
(21) Anmeldenummer: 00918848.3
(22) Anmeldetag: 05.04.2000
(51) Int. Cl.: A47J 37/07, A47L 13/34

(54) **REINIGUNGSGERÄT, INSBESONDERE FUR GRILLGERÄTE ODER DERGLEICHEN**
CLEANING DEVICE, IN PARTICULAR, FOR GRILLING APPLIANCES OR THE LIKE
APPAREIL DE NETTOYAGE DESTINE NOTAMMENT A DES GRILS OU EQUIVALENT

(30) Priorität: 07.04.1999 DE 29906210 U
(43) Veröffentlichungstag der Anmeldung: 09.01.2002
(73) Patentinhaber: Recknagel GmbH, 75334 Straubenhardt (DE); Schedlinski, Jürgen, 19294 Niendorf (DE)
(72) Erfinder: SCHEDLINSKI, Jürgen, D-19294 Niendorf (DE); RECKNAGEL, Stephan, D-75334 Straubenhardt (DE)
(74) Vertreter: Leitner, Waldemar, Dr. techn.
(86) Internationale Anmeldenummer: EP0003001
(87) Internationale Veröffentlichungsnummer: WO00059352

(56) Entgegenhaltungen:
- US-A- 2 722 148
- US-A- 4 282 625
- US-A- 5 735 014

## Beschreibung

Die Erfindung bezieht sich auf ein Reinigungsgerät, insbesondere für Grillgeräte oder dergleichen.

Solche Geräte werden zur individuellen Reinigung von Rosten eingesetzt, wie sie beispielsweise in Koch- oder Grillgeräten vorhanden sind.

Die Reinigung von solchen Rosten ist problematisch. Den Roststäben haften nach dem Gebrauch Lebensmittelreste und verbranntes Fett an, die solange nicht entfernt werden können, wie die Roststäbe erhitzt sind. Nach dem Abkühlen der Roststäbe ist aber das Fett erstarrt und mit einfachen Wischtüchern nicht mehr oder nur mit hohem Aufwand lösbar.

Es ist bekannt, Handbürsten für die Reinigung solcher Roste zu verwenden. So eine Reinigungsbürste ist beispielsweise in der DE-OS 28 44 832 beschrieben. Reinigungsbürsten reinigen nur unzureichend, setzen schnell zu und besitzen daher nur eine geringe Verwendungsdauer, und sie sind schwer zu handhaben.

Es ist auch aus einer Reihe von Veröffentlichungen bekannt, Reinigungsschaber zu verwenden. Ein solcher Schaber ist aus der DE 23 05 353.0 U1 bekannt. Er besteht aus einem Handgriff und einem Schabeblatt, das an seinem vorderen Umfangsrand mehrere unterschiedlich dimensionierte Ausnehmungen besitzt. Diese Ausnehmungen sind auf verschieden stark ausgelegte Roststäbe abgestimmt. Die Reinigung mit einem solchen Schaber ist unbefriedigend und aufwendig, da die jeweilige Ausnehmung des Reinigungsschabers die Roststäbe nicht umschließt, sondern nur an zwei Anlagepunkten berührt. Zur vollständigen Reinigung der obenliegenden Umfangsfläche muß der Reinigungsschaber mehrmals und unter einem steten Verändern des Ansetzwinkels gedreht und öfter gereinigt werden. Die untenliegenden Umfangsflächen der Roststäbe bleiben gänzlich ungereinigt.
Aus der DE 84 01 758.9 U1 ist nun ein verbesserter Reinigungsschaber bekannt, der als Schere ausgebildet ist und in den freien Schenkeln halbrunde und zueinander zugekehrte Aussparungen besitzt. Zwei solcher Aussparungen bilden im zusammengedrückten Zustand der Schere eine runde Reinigungsöffnung. Die Schere besitzt mehrere Aussparungen mit unterschiedlichen Durchmessern und ist so für unterschiedlich starke Roststäbe ausgelegt. Auch diese Reinigungsschere erfüllt nicht die Anforderungen. So ist sie nur an solchen Roststäben einsetzbar, die den entsprechenden Durchmesser aufweisen. Der Einsatz ist daher beschränkt. Außerdem werden die Roststäbe nur unzureichend gereinigt, da wegen der Freizügigkeit immer ein Ringspalt zwischen den Aussparungen der Schere und den Roststäben verbleiben muß und in dieser Stärke Schmutz an den Roststäben verbleibt. Die Schere ist auch schwer zu handhaben, da die Handkraft zum Verschieben der Schere mit seitlichem Abstand zu den zu reinigenden Roststäben eingeleitet werden muß. Das ist umständlich und führt zum Verkanten der Reinigungsschere.

Der Erfindung liegt daher die Aufgabe zu Grunde, ein Reinigungsgerät zu entwikkeln, das eine die Roststäbe zumindest teilweise umschließende und an alle Roststabdurchmesser anpaßbare Reinigungskante besitzt, und das leicht zu handhaben ist.

Diese Aufgabe wird erfindungsgemäß dadurch gelöst, daß daß das Reinigungsgerät aus einer Zange mit zwei Schenkeln besteht,
- die unter Eigenspannung in einer Offenstellung gehalten werden und die durch eine Handkraft in eine Arbeitstellung zusammendrückbar sind,
- die an ihren freien Enden jeweils einen quer und nach innen gerichteten Haltesteg besitzen, wobei
- beide Haltestege zueinander passierbar sind,
- in der Offenstellung der Zange zwischen den beiden Haltestegen eine negative Überdeckung besteht, die größer als der Durchmesser eines zu reinigenden Roststabes ist, und die freien Enden der beiden Schenkel einen äußeren Abstand aufweisen, der kleiner als der innere Abstand zweier benachbarter Roststäbe ist,
- in der Arbeitsstellung der Zange zwischen den Haltestegen eine positive Überdeckung besteht, wobei
- das Reinigungsgerät an seinen freien Enden ein Reinigungselement aufweist, durch das der zu reinigende Roststab zumindest teilweise umschlingbar ist.

Das erfindungsgemäße Reinigungsgerät zeichnet sich in vorteilhafter Art und Weise durch eine hohe Reinigungskraft aus. Das ist darauf zurückzuführen, daß das Reinigungselement im wesentlichen spielfrei den Roststab im wesentlichen umgibt und wie ein Schneidwerkzeug den Schmutz vom Roststab trennt. Ein Transport des Schmutzes auf der Oberfläche des Roststabes und damit ein Verschmieren des Schmutzes wie bei Schabern wird also vermieden. Dabei kann durch eine Veränderung der Handkraft die Spannung an dem Reinigungselement erhöht und an unterschiedliche Bedingungen angepaßt werden, was die Reinigungsqualität noch verbessert. Das Reinigungsgerät ist praktisch für jeden Rost auch mit unterschiedlichen Roststabdurchmessem anwendbar. Das erhöht in vorteilhafter Art und Weise den Einsatzbereich des erfindungsgemäßen Reinigungsgerätes. Die Handhabung ist außerordentlich einfach. Praktisch kann jeder Roststab mit einem Zug und ohne großen Krafteinsatz gereinigt werden. Dabei kann das Reinigungsgerät so eingesetzt werden, daß der abgetrennte Schmutz gleich wieder in das Grillfeuer fällt.

Eine vorteilhafte Weiterbildung der Erfindung sieht vor, daß als Reinigungselement eine Reinigungsschnur, insbesondere eine als ein mehradriger Draht ausgebildete Reinigungsschnur verwendet wird, wie er beispielsweise als Stahlvorfachseil beim Raubfischangeln eingesetzt wird. Ein derartiges Reinigungselement ist äußerst strapazierfähig und sehr flexibel.

Eine weitere vorteilhafte Weiterbildung der Erfindung sieht vor, daß die Reinigungsschnur eine Überlänge aufweist, die als Reserveschnur an einem der beiden Schenkel befestigt und für eine Erneuerung der Reinigungsschnur verwendet wird. Das Reinigungsgerät kann auch leicht mit einer bekannten und regelmäßig verwendeten Grillzange kombiniert werden.

Eine weitere vorteilhafte Weiterbildung der Erfindung sieht vor, daß mindestens einer der Haltestege eine Ausnehmung besitzt, die eine Reinigungskante aufweist. Eine derartige Maßnahme besitzt den Vorteil, daß hierdurch in besonders einfacher Art und Weise der an Roststäben anhaftende Schmutz entfernbar ist.

Eine weitere vorteilhafte Weiterbildung der Erfindung sieht vor, daß die Reinigungskante der Ausnehmung des Haltestegs eine halbkreisförmige, eine halbellipsenförmige, eine gekrümmte oder eine polygonale Form aufweist. Eine derartige Maßnahme besitzt den Vorteil, daß hierdurch besonders einfach das Reinigungsgerät für unterschiedliche Roststabdurchmesser verwendbar ist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: eine perspektivische Darstellung eines ersten Ausführungsbeispiels in der Offenstellung,
- Figur 2: die Draufsicht auf das erste Ausführungsbeispiel in der Arbeitsstellung,
- Figur 3: eine perspektivische Darstellung eines zweiten Ausführungsbeispiels,
- Figur 4: eine perspektivische Darstellung eines dritten Ausführungsbeispiels des Reinigungsgeräts,
- Figur 5: eine Vorderansicht des dritten Ausführungsbeispiels aus Richtung V der Figur 4 in seiner Offenstellung, und
- Figur 6: eine Vorderansicht des dritten Ausführungsbeispiels in seiner Arbeitsstellung.

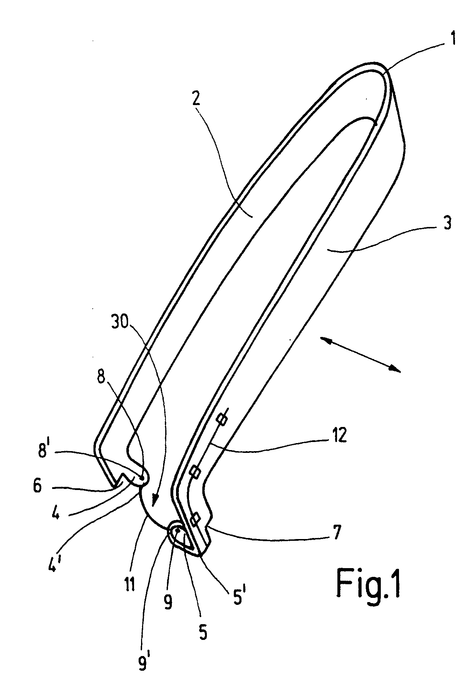

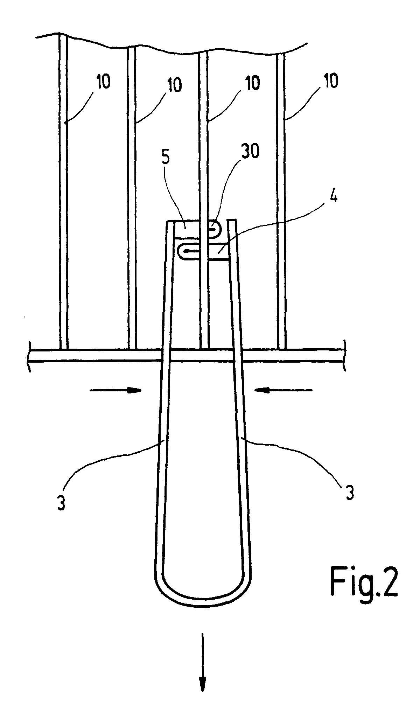

Das in den Figuren 1 und 2 dargestellte erste Ausführungsbeispiel eines Reinigungsgeräts ist aus einem Stück zangenartig ausgebildet und besitzt demnach zwei über eine Krümmung 1 verbundene Schenkel 2,3 die unter Eigenspannung in einer Offenstellung gehalten werden, und die in Überwindung der Eigenspannung durch eine Handkraft in eine Arbeitsstellung zusammendrückbar sind.

Jeder Schenkel 2, 3 besitzt an seinem freien Ende einen Haltesteg 4, 5, der quer und nach innen gerichtet angeordnet ist. Beide Haltestege 4, 5 befinden sich vorzugsweise in einer gleichen Ebene, aber in einem unterschiedlichen Abstand zur Krümmung 1, so daß die Haltestege 4, 5 zueinander in die zur Arbeitsstellung gerichtete Bewegung passierbar angeordnet sind. Jeder Schenkel 2, 3 besitzt eine Ausnehmung 6, 7, die dem gegenüberliegenden Haltesteg 4, 5 zugeordnet ist, und die demnach im zusammengedrückten Zustand des Reinigungsgerätes einen Freiraum für den gegenüberliegenden Haltesteg 4, 5 bildet, in die das freie Ende 4', 5' des entsprechenden Haltestegs 4, 5 eintreten kann. Das erlaubt ein Zusammendrücken der Schenkel 2, 3 bis auf Anschlag.

Am freien Ende 4', 5' jedes Haltesteges 4, 5 befindet sich ein Reinigungselement 30, durch das ein zu reinigender Roststab 10 (siehe Figur 2) zumindest teilweise umschlingbar ist. Zur Halterung des beim ersten Ausführungsbeispiel als Reinigungsschnur 11 ausgeführten Reinigungselement 30 weisen die freien Enden 4', 5' der Haltestege 4, 5 jeweils eine als Haltepunkte 8', 9' für die Reinigungsschnur 11 fungierende Befestigungsbohrung 8, 9 auf. Dabei ist die Anordnung der beiden Befestigungsbohrungen 8, 9 im Zusammenspiel mit dem Arbeitsweg der beiden Schenkel 2, 3 so festgelegt, daß beide Befestigungsbohrungen 8, 9 zueinander in der Offenstellung der Schenkel 2, 3 eine negative Überdeckung und in der Arbeitsstellung der beiden Schenkel 2, 3 eine positive Überdeckung aufweisen. Sowohl die negative als auch die positive Überdeckung sind breiter als der Durchmesser der zu reinigenden Roststäbe 10 eines Grillgerätes ausgelegt. Beide Befestigungsbohrungen 8, 9 sind von der Reinigungsschnur 11 durchgezogen, die an jedem freien Ende mit einem, ein Herausziehen der Reinigungsschnur 11 verhindernden Halteknoten versehen ist . In vorteilhafter Weise ist die Reinigungsschnur 11 aus einem flexiblen und mehradrigen Draht mit einem Durchmesser etwa zwischen 0,3- 0,5 mm gebildet. Es eignen sich aber grundsätzlich auch Materialien aus Natur- oder Kunststoffen. Die Reinigungsschnur 11 kann mit einer Überlänge ausgestattet sein, die als Reserveschnur 12 ausgelegt und die seitlich an einem der beiden Schenkel 2, 3 befestigt ist.

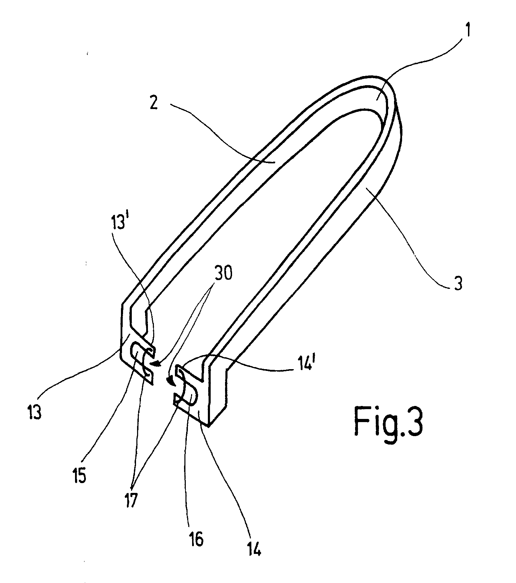

Ein zweites Ausführungsbeispiel des Reinigungsgerätes nach der Fig. 3 besitzt Haltestege 13, 14, die sich gegenüberliegende Ausnehmungen 15, 16 besitzen. Jede dieser Ausnehmungen 15, 16 ist am offenen Ende durch eine flexible Reinigungsschnur 17 verschlossen. Die beiden Haltestege 13, 14 sind beim zweiten Ausführungsbeispiel des Reinigungsgeräts wieder in unterschiedlichem Abstand zur Krümmung 1 angeordnet, so daß die Haltestege 13, 14 sich bei ihrer zur Arbeitsstellung gerichteten Schließbewegung passieren können und in ihrer Arbeitsstellung eine positive Überdeckung aufweisen, wobei die beiden flexiblen Reinigungsschnüre 17, welche zusammen das Reinigungselement 30 des Reinigungsgeräts der Figur 3 ausbilden, den zu reinigenden Roststab 10 im wesentlichen vollkommen umschlingen.

Der äußere Abstand der Schenkel 2, 3 des Reinigungsgerätes in der Offenstellung ist wiederum kleiner als der innere Abstand der beiden Roststäbe 10, die zu dem zu reinigenden Roststab 10 benachbart sind.

Zum Reinigen der Roststäbe 10 z. B. eines Grillgerätes wird das Reinigungsgerät nach der Fig. 1 mit einer Hand erfaßt und von oben nacheinander auf jeden Roststab 10 gelegt. Dabei kommt die Reinigungsschnur 11 jeweils mit dem Roststab 10 in Auflage. Durch einen leichten Druck auf den Roststab 10 und durch die gleichzeitige Betätigung der beiden Schenkel 2, 3 des Reinigungsgerätes kommen die Haltestege 4, 5 unterhalb des Roststabes 10 in ihre positive Überdeckung, so daß die Reinigungsschnur eine Schlaufe bildet und sich vollständig um den Roststab 10 wickelt.

Beim Reinigungsgerät nach der Fig. 3 wird der Roststab 10 beidseitig von jeder Reinigungsschnur 17 umfaßt und durch die Überlappung der beiden Reinigungsschnüre 17 vollständig umschlungen.

Die Spannung der Reinigungsschnüre 11, 17 beider Ausführungsbeispiele kann durch den äußeren Druck auf die beiden Schenkel 2, 3 variiert werden. Danach wird das Reinigungsgerät ein- oder mehrmals über die gesamte Länge jedes Roststabes 10 gezogen und / oder geschoben, bis jeglicher Schmutz vom Roststab 10 getrennt ist.

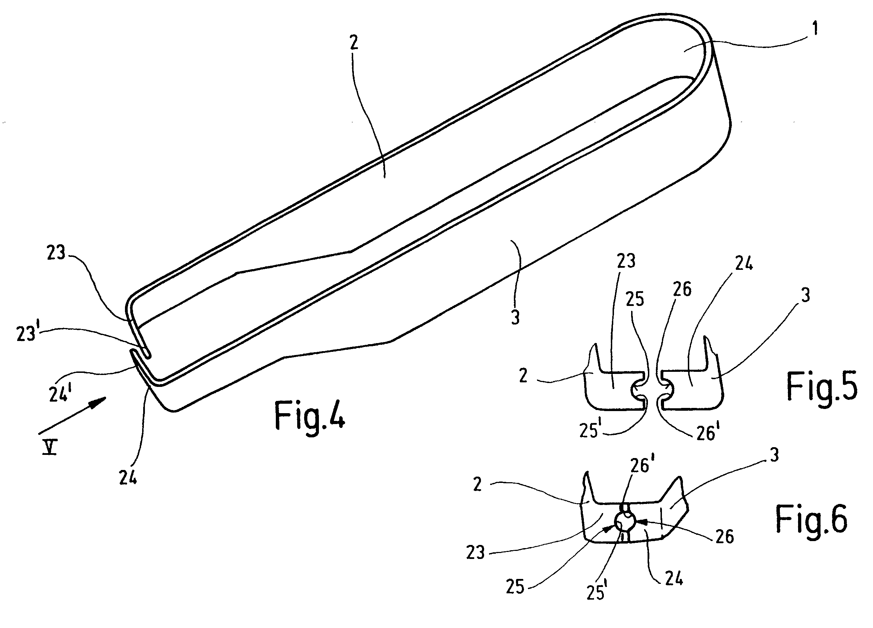

In den Figuren 4 bis 6 ist nun eine dritte Ausführungsform eines Reinigungsgeräts dargestellt, welches eine Abwandlung des Reinigungsgeräts der Figur 3 darstellt, so daß einander entsprechende Bauteile mit gleichen Bezugszeichen versehen werden können und nicht mehr näher beschrieben werden müssen. Auch hierbei sind wieder zwei quer und nach innen verlaufende Haltestege 23, 24 in unterschiedlichem Abstand zu der die beiden Schenkel 2 verbindenden Krümmung 1 des zangenartig ausgebildeten Reinigungsgeräts angeordnet, so daß-wie am besten aus Figur 6 ersichtlich ist - in der Arbeitsstellung die beiden Haltestege 23, 24 eine positive Überdeckung aufweisen.

Der wesentliche Unterschied des Reinigungsgeräts gemäß dem dritten Ausführungsbeispiel gegenüber dem Reinigungsgerät der Figur 3 besteht darin, daß das Reinigungselement 30 nicht durch die beiden zusammenwirkenden Reinigungsschnüre 17 ausgebildet ist, sondern daß vorgesehen ist, daß den Ausnehmungen 15, 16 des zweiten Ausführungsbeispiels entsprechende Ausnehmungen 25, 26 in den freien Enden 23', 24' der Haltestege 23, 24 jeweils mit einer Reinigungskante 25', 26' versehen sind, welche die Funktion der Reinigungsschnur 11 des ersten Ausführungsbeispiels bzw. der Reinigungsschnüre 17 des zweiten Ausführungsbeispiels übernehmen. Hierbei wird bevorzugt, daß die Kontur der zusammenwirkenden Reinigungskanten 25', 26' der beiden Ausnehmungen 25, 26 - wie in Figur 5 dargestellt - halbkreisförmig ausgeführt ist. Es ist aber auch möglich, eine halbellipsenförmige oder eine gekrümmte Form zu verwenden. Auch ist es möglich, daß die Reinigungskanten 25', 26' die Form eines Polygonzugs aufweisen. Die Kontur mindestens einer Reinigungskante 25', 26' wird hierbei vorzugsweise derart gewählt, daß Roststäbe 10 unterschiedlichen Durchmessers in dem im wesentlichen durch die beiden Reinigungskanten 25', 26' ausgebildeten Reinigungselement 30 aufnehmbar sind.

Zum Reinigen der Roststäbe 10 z. B. eines Grillgeräts mit dem Reinigungsgerät gemäß der Figuren 4 bis 6 werden die Schenkel 2, 3 mit einer Hand erfaßt und von oben oder von unten derart beiderseits des zu reinigenden Roststabs 10 positioniert, daß der Roststab 10 in etwa mittig zwischen den beiden Ausnehmungen 25, 26 der freien Enden 23', 24' der Haltestege 23, 24 liegen. Durch ein Zusammendrücken der beiden Schenkel 2, 3 des Reinigungsgeräts werden nun die beiden Haltestege 23, 24 und somit auch die beiden Ausnehmungen 25', 26' von ihrer in Figur 5 gezeigten Offenstellung in ihre in Figur 6 gezeigte Arbeitsstellung bewegt, wobei der zu reinigende Roststab 10 dann von den Ausnehmungen 25, 26 der beiden sich in der Arbeitsstellung positiv überdeckenden Haltestege 23, 24 zumindest teilweise und vorzugsweise vollständig umschlossen wird, wobei im Falle einer nicht-vollständigen Umschließung der nicht von der Reinigungskante 25', 26' beaufschlagte Bereich des Roststabes 10 durch eine einfache Drehung um die Längsachse des Reinigungsgerätes, vorzugsweise unter Beibehaltung des Ansetzwinkels, erfaßbar ist. Da - wie bereits erwähnt - der äußere Abstand der freien Enden der Schenkel 2, 3 kleiner als der innere Abstand benachbarter Roststäbe 10 ist, kann das Reinigungsgerät im wesentlichen vollständig in seiner Längsrichtung zwischen benachbarte Roststäbe 10 eingebracht werden, so daß ein nachteiliges Verkanten beim beschriebenen Reinigungsgerät in vorteilhafter Art und Weise vermieden wird.

## Patentansprüche

1. Reinigungsgerät, insbesondere für Grillgeräte oder dergleichen, **dadurch gekennzeichnet, daß** das Reinigungsgerät aus einer Zange mit zwei Schenkeln (2, 3) besteht,
- die unter Eigenspannung in einer Offenstellung gehalten werden und die durch eine Handkraft in eine Arbeitstellung zusammendrückbar sind,
- die an ihren freien Enden jeweils einen quer und nach innen gerichteten Haltesteg (4, 5; 13, 14; 23, 24) besitzen, wobei
- beide Haltestege (4, 5; 13, 14; 23, 24) zueinander passierbar sind,
- in der Offenstellung der Zange zwischen den beiden Haltestegen ( 4, 5; 13, 14; 23, 24) eine negative Überdeckung besteht, die größer als der Durchmesser eines zu reinigenden Roststabes (10) ist, und die freien Enden der beiden Schenkel (2, 3) einen äußeren Abstand aufweisen, der kleiner als der innere Abstand zweier benachbarter Roststäbe (10) ist,
- in der Arbeitsstellung der Zange zwischen den Haltestegen (4, 5; 13, 14; 23, 24) eine positive Überdeckung besteht, wobei
- das Reinigungsgerät an seinen freien Enden (4', 5'; 13', 14'; 23', 24') ein Reinigungselement (30) aufweist, durch das der zu reinigende Roststab (10) zumindest teilweise umschlingbar ist.

2. Reinigungsgerät nach Anspruch 1, **dadurch gekennzeichnet, daß** das Reinigungselement (30) des Reinigungsgeräts mindestens eine flexible Reinigungsschnur (11, 17) aufweist.

3. Reinigungsgerät nach Anspruch 2, **dadurch gekennzeichnet, daß** die Haltestege (4, 5) über die flexible Reinigungsschnur (11) verbunden sind, wobei die flexible Reinigungsschnur (11) an jeweils einem Haltepunkt (8', 9') eines jeden Haltestegs (4, 5) befestigt ist, und daß die positive Überdeckung der Haltepunkte (8', 9') der Reinigungsschnur (11) größer als der Durchmesser des zu reinigenden Roststabes (10) ist.

4. Reinigungsgerät nach Anspruch 3, **dadurch gekennzeichnet, daß** die Haltepunkte (8', 9') der Reinigungsschnur (11) jeweils als eine Befestigungsbohrung (8, 9) am freien Ende (4', 5') eines jeden Haltestegs (4, 5) ausgebildet sind.

5. Reinigungsgerät nach einem der vorangehenden Ansprüche, **dadurch gekennzeichnet, daß** die Reinigungsschnur (11) mit ihren freien Enden durch die Befestigungsbohrungen (8, 9) geführt und durch einen Knoten an den freien Enden der Reinigungsschnur (11) gesichert ist.

6. Reinigungsgerät nach einem der vorangehenden Ansprüche, **dadurch gekennzeichnet, daß** mindestens einer der beiden Haltestege (13, 14; 23, 24) eine Ausnehmung (15, 16; 25, 26) aufweist, vor die in der Offenstellung des Reinigungsgeräts der zu reinigende Roststab (10) positionierbar ist, und die in der Arbeitsstellung des Reinigungsgeräts den zu reinigenden Roststab (10) zumindest teilweise umschließt.

7. Reinigungsgerät nach einem der vorangehenden Ansprüche, **dadurch gekennzeichnet, daß** als Reinigungselement (30)zwei Reinigungsschnüre (17) verwendet sind, die jeweils an einem der beiden Haltestege (13, 14) befestigt sind und das offene Ende der Ausnehmung (15, 16) eines jeden Haltestegs (13, 14) verschließen.

8. Reinigungsgerät nach einem der vorangehenden Ansprüche, **dadurch gekennzeichnet, daß** die Reinigungsschnur (11, 17) aus einem mehradrigen Draht mit einem Durchmesser von etwa 0,3 - 0,5 mm besteht.

9. Reinigungsgerät nach einem der vorangehenden Ansprüche, **dadurch gekennzeichnet, daß** die Reinigungsschnur (11, 17) mit einer sich aus einer Überlänge ergebenden Reserveschnur (12) ausgerüstet ist.

10. Reinigungsgerät nach einem der vorangehenden Ansprüche, **dadurch gekennzeichnet, daß** die beiden Haltestege (4, 5; 13, 14; 23, 24) des Reinigungsgeräts in unterschiedlichem Abstand zu der die beiden Schenkel (2, 3) des Reinigungsgeräts verbindenden Krümmung (1) angeordnet sind.

11. Reinigungsgerät nach einem der vorangehenden Ansprüche, **dadurch gekennzeichnet, daß** mindestens eine Ausnehmung (25, 26) eines der Haltestege (23, 24) eine als Reinigungselement (30) fungierende Reinigungskante (25', 26') aufweist.

12. Reinigungsgerät nach einem der vorangehenden Ansprüche, **dadurch gekennzeichnet, daß** die Reinigungskante (25', 26') der Ausnehmung (25, 26) des Haltestegs (23, 24) eine halbkreisförmige, eine halbellipsenförmige, eine gekrümmte oder eine polygonale Form besitzt.

13. Reinigungsgerät nach Anspruch 14, daduch **gekennzeichnet**, daß die Kontur mindestens einer Reinigungskante (25', 26') derart ausgebildet ist, daß Roststäbe (10) unterschiedlichen Durchmessers darin aufnehmbar sind.

14. Reinigungsgerät nach einem der Ansprüche 1 bis 13, **dadurch gekennzeichnet, daß** das Reinigungsgerät mit einer Grilizange kombiniert ist.

## Claims

1. A cleaning device, particularly for grilling appliances or the like, **characterized in that** the cleaning device comprises a pair of tongs having two limbs (2,3)
- said limbs being held in an opened position by means of a tension of their own, and being squeezable together into a working position by means of a force applied by hand,
- said limbs comprising each, on their free ends, a holding element (4, 5; 13, 14; 23, 24) which is oriented in a transversal and inwardly directed manner,
- both holding elements (4, 5; 13, 14; 23, 24) can pass by one another,
- when the tongs are in said opened position, a negative overlap exists between both holding elements (4, 5; 13, 14; 23, 24), said overlap being larger than the diameter of a grate bar to be cleaned (10), and said free ends of both limbs (2,3) having an outer distance, which is smaller than the inner distance between two neighbouring grate bars (10),
- when the tongs are in said working position, a positive overlap occurs between the holding elements (4, 5; 13, 14; 23, 24), whereby
- said cleaning device has, on its free ends (4', 5'; 13', 14'; 23', 24'), a cleaning element (30), said cleaning element being able to be at least partially wrapped around the grate bar (10) to be cleaned.

2. The cleaning device according to claim 1, **characterized in that** said cleaning element (30) of said cleaning device comprises at least one flexible cleaning cable (11,17).

3. The cleaning device according to claim 2, **characterized in that** said holding elements (4,5) are connected by said flexible cleaning cable (11), wherein said flexible cleaning cable (11) is fastened at one mounting point (8', 9') of each of said holding elements (4,5), respectively, said positive overlap of said mounting points (8', 9') of said cleaning cable (11) being larger than the diameter of the grate bar (10) to be cleaned.

4. The cleaning device according to claim 3, **characterized in that** said mounting points (8', 9') of said cleaning cable (11) are each formed as a mounting hole (8, 9) at the free end (4', 5') of each of said holding elements (4, 5).

5. The cleaning device according to one of the preceding claims, **characterized in that** said cleaning cable (11) is led through the mounting holes (8, 9) by its free ends and is secured by a knot at the free ends of the cleaning cable (11).

6. The cleaning device according to one of the preceding claims, **characterized in that** at least one of said two holding elements (13, 14; 23, 24) is provided with a recess (15, 16; 25, 26) in front of which said grate bar (10) to be cleaned can be positioned in the opened position of the cleaning device, said recess (15, 16; 25, 26) at least partially wrapping around said grate bar (10) to be cleaned in the working position.

7. The cleaning device according to one of the preceding claims, **characterized in that** two cables (17) are used as said cleaning element (30), said cleaning cables (17) being each fastened to one of said two holding elements (13, 14), and close the open end of said recess (15, 16) of each of said holding elements (13, 14).

8. The cleaning device according to one of the preceding claims, **characterized in that** said cleaning cable (11, 17) consists of a multi-core wire having a diameter of approximately 0,3-0,5 mm.

9. The cleaning device according to one of the preceding claims, **characterized in that** said cleaning cable (11, 17) is provided with a reserve cable (12) resulting from an excess length.

10. The cleaning device according to one of the preceding claims, **characterized in that** the two holding elements (4, 5; 13, 14; 23, 24) of said cleaning device are arranged at a different distance from the curved part (1) connecting said two limbs (2, 3) of said cleaning device.

11. The cleaning device according to one of the preceding claims , **characterized in that** at least one recess (25, 26) of one of said holding elements (23, 24) is provided with a cleaning edge (25', 26') acting as the cleaning element (30).

12. The cleaning device according to one of the preceding claims, **characterized in that** said cleaning edge (25', 26') of the recess (25, 26) of the holding element (23, 24) has a semi-circular shape, a semi-elliptical shape, a curved, or a polygonal shape.

13. The cleaning device according to claim 12, **characterized in that** the outline of at least one cleaning edge (25', 26') is shaped such that grate bars (10) of different diameters are receivable therein.

14. The cleaning device according to claim 1, **characterized in that** said cleaning device is combined with a pair of grill tongs.

## Revendications

1. Appareil de nettoyage, en particulier pour des grils ou analogues, **caractérisé en ce que** l'appareil de nettoyage est constitué par une pince comprenant deux branches (2, 3)
- qui, dans des conditions de contrainte latente, sont maintenues dans une position d'ouverture et qui peuvent être comprimées dans une position de travail via la force exercée par une main,
- qui possèdent, à leurs extrémités libres, respectivement un arrêt (4, 5 ; 13, 14 ; 23, 24) orienté en direction transversale et vers l'intérieur,
- les deux arrêts (4, 5 ; 13, 14 ; 23, 24) pouvant être franchis l'un par rapport à l'autre ;
- dans la position d'ouverture de la pince, un recouvrement négatif existe entre les deux arrêts (4, 5 ; 13, 14 ; 23, 24), qui est supérieur au diamètre d'un barreau de grille (10) à nettoyer, et les extrémités libres des deux branches (2, 3) présentent un écartement externe qui est inférieur à l'écartement interne de deux barreaux de grille voisins (10) ;
- dans la position de travail de la pince, un recouvrement positif existe entre les arrêts (4, 5 ; 13, 14 ; 23, 24),
- l'appareil de nettoyage présentant, à ces extrémités libres (4', 5' ; 13', 14' ; 23', 24'), un élément de nettoyage (30) par lequel le barreau de grille (10) qui doit être nettoyé peut être entouré au moins en partie.

2. Appareil de nettoyage selon la revendication 1, **caractérisé en ce que** l'élément de nettoyage (30) de l'appareil de nettoyage présente au moins un cordon de nettoyage flexible (11, 17).

3. Appareil de nettoyage selon la revendication 2, **caractérisé en ce que** les arrêts (4, 5) sont reliés via le cordon de nettoyage flexible (11), le cordon de nettoyage flexible (11) étant fixé à respectivement un point d'arrêt (8', 9') d'un arrêt respectif (4, 5), et **en ce que** le recouvrement positif des points d'arrêt (8', 9') du cordon de nettoyage (11) est supérieur au diamètre du barreau de grille (10) à nettoyer.

4. Appareil de nettoyage selon la revendication 3, **caractérisé en ce que** les points d'arrêt (8', 9') du cordon de nettoyage (11) sont réalisés respectivement sous la forme d'un alésage de fixation (8, 9) à l'extrémité libre (4', 5') d'un arrêt respectif (4, 5).

5. Appareil de nettoyage selon l'une quelconque des revendications précédentes, **caractérisé en ce que** le cordon de nettoyage (11) est guidé avec ses extrémités libres à travers les alésages de fixation (8, 9) et est fixé par un noeud aux extrémités libres du cordon de nettoyage (11).

6. Appareil de nettoyage selon l'une quelconque des revendications précédentes, **caractérisé en ce qu'**au moins une des deux arrêts (13, 14 ; 23, 24) présente un évidement (15, 16 ; 25, 26) devant lequel, dans la position d'ouverture de l'appareil de nettoyage, le barreau de grille (10) à nettoyer peut venir se disposer, et qui entoure au moins en partie, dans la position de travail de l'appareil de nettoyage, le barreau de grille (10) à nettoyer.

7. Appareil de nettoyage selon l'une quelconque des revendications précédentes, **caractérisé en ce qu'**on utilise, à titre d'élément de nettoyage (30), deux cordons de nettoyage (17) qui sont respectivement fixés à un des deux arrêts (13, 14), l'extrémité ouverte de l'évidement (15, 16) renfermant un arrêt respectif (13, 14).

8. Appareil de nettoyage selon l'une quelconque des revendications précédentes, **caractérisé en ce que** le cordon de nettoyage (11, 17) est constitué par un fil métallique multifilaire possédant un diamètre d'environ 0,3 à 0,5 mm.

9. Appareil de nettoyage selon l'une quelconque des revendications précédentes, **caractérisé en ce que** le cordon de nettoyage (11, 17) est équipé d'un cordon de réserve (12) procurant une longueur supplémentaire.

10. Appareil de nettoyage selon l'une quelconque des revendications précédentes, **caractérisé en ce que** les deux arrêts (4, 5 ; 13, 14 ; 23, 24) de l'appareil de nettoyage sont disposés à des distances différentes par rapport à la courbe (1) reliant les deux branches (2, 3) de l'appareil de nettoyage.

11. Appareil de nettoyage selon l'une quelconque des revendications précédentes, **caractérisé en ce qu'**au moins un évidement (25, 26) d'un des deux arrêts (23, 24) présente une arête de nettoyage (25', 26') faisant office d'élément de nettoyage (30).

12. Appareil de nettoyage selon l'une quelconque des revendications précédentes, **caractérisé en ce que** l'arête de nettoyage (25', 26') de l'évidement (25, 26) de l'arrêt (23, 24) possède une forme en demi-cercle, une forme en demi-ellipse, une forme courbe ou une forme polygonale.

13. Appareil de nettoyage selon la revendication 14, **caractérisé en ce que** le contour d'au moins une arête de nettoyage (25', 26') est réalisée de telle sorte que des barreaux de grille (10) de diamètres différents peuvent venir s'y loger.

14. Appareil de nettoyage selon l'une quelconque des revendications 1 à 13, **caractérisé en ce que** l'appareil de nettoyage est combiné avec une pince pour gril.
